# EUROPEAN PATENT APPLICATION

(11) **EP 4 517 877 A1**
(43) Date of publication of application: **05.03.2025**
(21) Application number: 23796313.7
(22) Date of filing: 24.04.2023
(51) Int. Cl.: H01M 4/38, H01M 4/36

(54) **NEGATIVE ELECTRODE ACTIVE MATERIAL FOR NONAQUEOUS ELECTROLYTE SECONDARY BATTERY, AND NONAQUEOUS ELECTROLYTE SECONDARY BATTERY**

(30) Priority: 26.04.2022 JP 2022072282
(71) Applicant: Panasonic Energy Co., Ltd., Osaka 570-8511 (JP)
(72) Inventor: MIZOBATA, Shun, Kadoma-shi, Osaka 571-0057 (JP); IWAMI, Yasunobu, Kadoma-shi, Osaka 571-0057 (JP); KOIZUMI, Isao, Kadoma-shi, Osaka 571-0057 (JP); MORIYA, Shigeki, Kadoma-shi, Osaka 571-0057 (JP)
(74) Representative: Novagraaf International SA
(86) International application number: PCT/JP2023/016094
(87) International publication number: WO 2023/210573

(57) **Abstract**

Provided is a nonaqueous electrolyte secondary battery having excellent safety and charge/discharge cycle characteristics. The negative electrode active substance for a nonaqueous electrolyte secondary battery according to one embodiment of this disclosure contains an Si-containing compound material. The Si-containing compound material contains: base particles having Si microparticles dispersed in a base phase thereof; and GaN that coats the surface of the base particles.

## Description

### TECHNICAL FIELD

The present disclosure relates to a negative electrode active material for a non-aqueous electrolyte secondary battery and a non-aqueous electrolyte secondary battery.

### BACKGROUND ART

From the viewpoint of higher capacity, a Si-based material may be used as a negative electrode active material of a non-aqueous electrolyte secondary battery in recent years. Patent Literature 1 discloses art in which, in a negative electrode including a Si-based material, a skeleton is formed in a negative electrode mixture layer with a skeleton-forming agent including a silicate salt having a siloxane bond or a phosphate salt having an aluminophosphate bond to inhibit short circuit during a nail penetration test.

### CITATION LIST

### PATENT LITERATURE

PATENT LITERATURE 1: Japanese Unexamined Patent Application Publication No. 2018-85276

### SUMMARY

However, use of the art described in Patent Literature 1 may deteriorate conductivity of the negative electrode due to the skeleton formed with the skeleton-forming agent to decrease a battery capacity with repeated charge and discharge. Patent Literature 1 does not investigate achievement of both safety and charge-discharge cycle characteristics of the battery, and still has room for improvement.

It is an advantage of the present disclosure to provide a non-aqueous electrolyte secondary battery having safety and excellent charge-discharge cycle characteristics.

A negative electrode active material for a non-aqueous electrolyte secondary battery of an aspect of the present disclosure includes a Si-containing composite material, wherein the Si-containing composite material includes: base particles in which Si fine particles are dispersed in a base phase; and GaN coating on surfaces of the base particles.

A non-aqueous electrolyte secondary battery of an aspect of the present disclosure comprises: a negative electrode including the above negative electrode active material for a non-aqueous electrolyte secondary battery; a positive electrode; and a non-aqueous electrolyte.

According to the negative electrode active material for a non-aqueous electrolyte secondary battery of the present disclosure, the safety and charge-discharge cycle characteristics of the non-aqueous electrolyte secondary battery may be improved.

### BRIEF DESCRIPTION OF DRAWING

FIG. 1 is an axial sectional view of a cylindrical secondary battery of an example of an embodiment.
FIG. 2 is a sectional view of a Si-containing composite material in an example of an embodiment.

### DESCRIPTION OF EMBODIMENTS

Hereinafter, an example of an embodiment of a cylindrical secondary battery according to the present disclosure will be described in detail with reference to the drawings. In the following description, specific shapes, materials, values, directions, and the like, which are examples for facilitating understanding of the present invention, may be appropriately modified with specifications of secondary batteries. Hereinafter, a cylindrical secondary battery in which a wound electrode assembly is housed in a cylindrical exterior will be exemplified, but the electrode assembly is not limited to the wound electrode assembly, and may be a stacked electrode assembly in which a plurality of positive electrodes and a plurality of negative electrodes are alternately stacked one by one via a separator. The exterior is not limited to the cylindrical exterior, and may be, for example, a rectangular exterior, a coin-shaped exterior, or the like. The exterior may be a pouch composed of laminated sheets including a metal layer and a resin layer. The description " a numerical value (A) to a numerical value (B)" herein means greater than or equal to the value (A) and less than or equal to the value (B).

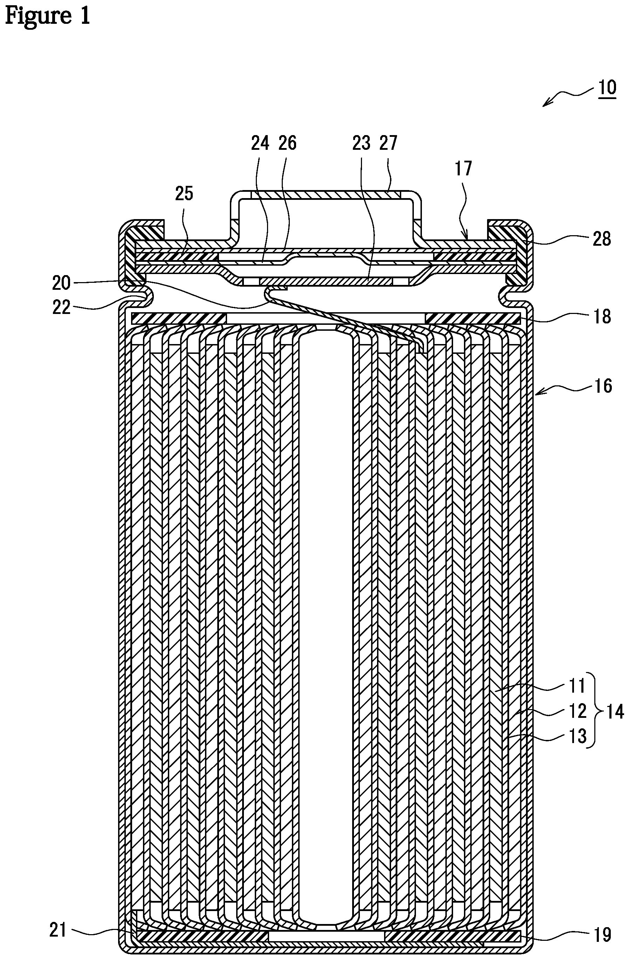

FIG. 1 is a sectional view of a cylindrical secondary battery 10 of an example of an embodiment. As illustrated in FIG. 1, the secondary battery 10 comprises a wound electrode assembly 14, a non-aqueous electrolyte, and an exterior housing can 16 housing the electrode assembly 14 and the non-aqueous electrolyte. The electrode assembly 14 has a positive electrode 11, a negative electrode 12, and a separator 13, and has a wound structure in which the positive electrode 11 and the negative electrode 12 are spirally wound via the separator 13. The exterior housing can 16 is a bottomed cylindrical metallic container having an opening on one side in an axial direction, and the opening of the exterior housing can 16 is capped with a sealing assembly 17. Hereinafter, for convenience of description, the sealing assembly 17 side of the battery will be described as the "upper side", and the bottom side of the exterior housing can 16 will be described as the "lower side".

All of the positive electrode 11, the negative electrode 12, and the separator 13 that constitute the electrode assembly 14 have an elongated band-shape, and are spirally wound to be alternately stacked in a radial direction of the electrode assembly 14. The separator 13 separates the positive electrode 11 and the negative electrode 12 each other. To prevent precipitation of lithium, the negative electrode 12 is formed to be one size larger than the positive electrode 11. That is, the negative electrode 12 is formed to be longer than the positive electrode 11 in a longitudinal direction and a width direction (short direction). Two of the separator 13 are formed to be one size larger than at least the positive electrode 11, and disposed to sandwich the positive electrode 11, for example. The electrode assembly 14 comprises a positive electrode lead 20 connected to the positive electrode 11 by welding or the like and a negative electrode lead 21 connected to the negative electrode 12 by welding or the like.

Insulating plates 18 and 19 are disposed on the upper and lower sides of the electrode assembly 14, respectively. In the example illustrated in FIG. 1, the positive electrode lead 20 extends through a through hole in the insulating plate 18 toward a side of the sealing assembly 17, and the negative electrode lead 21 extends along an outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

A gasket 28 is provided between the exterior housing can 16 and the sealing assembly 17 to achieve sealability inside the battery. On the exterior housing can 16, a grooved portion 22 in which part of a side wall thereof projects inside for supporting the sealing assembly 17 is formed. The grooved portion 22 is preferably formed in a circular shape along a circumferential direction of the exterior housing can 16, and supports the sealing assembly 17 with the upper surface thereof. The sealing assembly 17 is fixed on the upper part of the exterior housing can 16 with the grooved portion 22 and with an end of the opening of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at respective central parts thereof, and the insulating member 25 is interposed between the respective circumferential parts thereof. If an internal pressure of the battery increases due to abnormal heat generation, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through the opening of the cap 27.

Hereinafter, the positive electrode 11, the negative electrode 12, the separator 13 and the non-aqueous electrolyte, which constitute the secondary battery 10, particularly the negative electrode 12, will be described in detail.

### [Negative Electrode]

The negative electrode 12 has, for example, a negative electrode current collector and a negative electrode mixture layer formed on a surface of the negative electrode current collector. The negative electrode mixture layer is preferably formed on both surfaces of the negative electrode current collector. For the negative electrode current collector, a foil of a metal stable within a potential range of the negative electrode, such as copper, a film in which such a metal is disposed on a surface layer, and the like may be used. The negative electrode mixture layer includes, for example, a negative electrode active material, a binder, and the like. The negative electrode 12 may be produced by, for example, applying a negative electrode mixture slurry including the negative electrode active material, the binder, and the like on both the surfaces of the negative electrode current collector, drying the coating to form the negative electrode mixture layer, and then rolling this negative electrode mixture layer.

Examples of the binder included in the negative electrode mixture layer include a fluororesin, a polyimide resin, an acrylic resin, a polyolefin resin, polyacrylonitrile (PAN), styrene-butadiene rubber (SBR), nitrile-butadiene rubber (NBR), carboxymethylcellulose (CMC) or a salt thereof, polyacrylic acid (PAA) or a salt thereof (which may be PAA-Na, PAA-K, and the like, or a partially neutralized salt), and polyvinyl alcohol (PVA). These may be used singly, or in combination of two or more thereof.

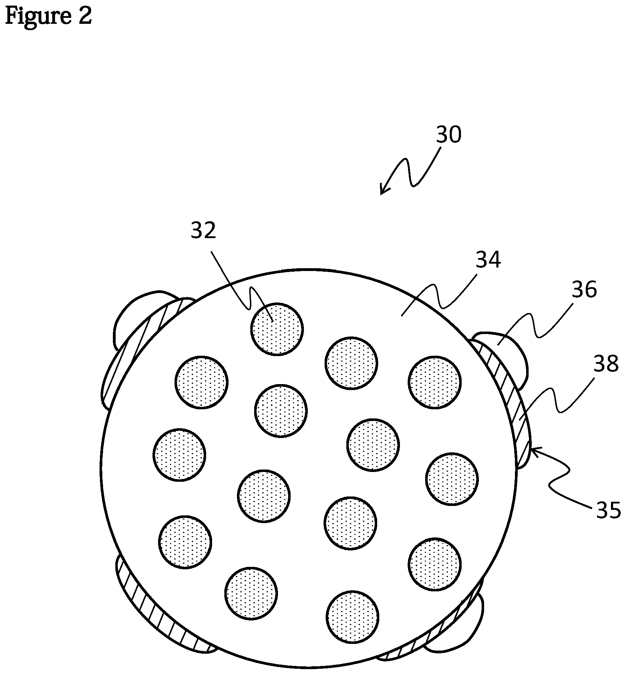

The negative electrode active material included in the negative electrode mixture layer includes a Si-containing composite material 30. FIG. 2 illustrates a sectional view of the Si-containing composite material 30 in an example of an embodiment. As illustrated in FIG. 2, the Si-containing composite material 30 includes: base particles 35 in which Si fine particles 32 are dispersed in a base phase 34; and GaN 36 coating on surfaces of the base particles 35. This configuration may improve the safety and the charge-discharge cycle characteristics of the secondary battery. It is presumed that the GaN 63 coating the surfaces improves thermal conductivity of the Si-containing composite material 30 to improve the safety of the secondary battery. Coating the surfaces of the base particles 35 with a compound such as a semiconductor typically deteriorates the charge-discharge cycle characteristics, but the investigation by the present inventors have found that coating with the GaN 36 specifically does not deteriorate the charge-discharge cycle characteristics.

The base particles 35 have, for example, a sea-island structure in which the Si fine particles 32 are substantially uniformly dispersed in the base phase 34. The base phase 34 is composed of, for example, assembling particles finer than the Si fine particles 32. A content rate of the Si fine particles 32 is, for example, greater than or equal to 30 mass% and less than or equal to 70 mass% relative to a total mass of the base particle 35.

The base phase 34 is, for example, a silicate phase. The base phase 34 may be a lithium silicate phase. The lithium silicate phase is composed of, for example, a compound represented by the general formula Li_{2z}SiO_{(2+z)} (0 < z < 2). The base phase 34 may be a silicon oxide (SiO₂) phase. The base phase 34 may be an amorphous carbon phase.

The base particles 35 may have a carbon coating 38 on the surfaces. This carbon coating improves conductivity of the Si-containing composite material 30. As illustrated in FIG. 2, the carbon coating 38 may be present as dots so as to coat at least a part of surface of the particle composed of the Si fine particles 32 and the base phase 34, or may be present so as to coat the entire surface of the particle composed of the Si fine particles 32 and the base phase 34. A thickness of the carbon coating 38 is preferably greater than or equal to 1 nm and less than or equal to 200 nm in order to achieve both the conductivity and diffusion of Li ions toward the particle inside.

When the base particles 35 have the carbon coating 38 on the surfaces, the GaN 36 preferably coats at least a part of the surface of the carbon coating 38. In this case, the GaN 36 may coat surfaces of the base particles 35 where the carbon coating 38 is absent. As illustrated in FIG. 2, the GaN 36 may be scatteringly present so as to coat at least a part of the surfaces of the base particles 35, or may be present so as to coat the entire surfaces of the base particles 35.

In the Si-containing composite material 30, a mass of the GaN 36 is preferably greater than or equal to 10 parts by mass and less than or equal to 20 parts by mass relative to 100 parts by mass of the base particle 35. When the amount of the GaN 36 is within this range, the aforementioned effect by GaN becomes more remarkable.

The negative electrode active material included in the negative electrode mixture layer may include, for example, graphite in addition to the Si-containing composite material 30. Examples of the graphite include natural graphite such as flake graphite and artificial graphite such as massive artificial graphite and graphitized mesophase carbon microbead. The negative electrode active material may include a metal that forms an alloy with lithium, such as Si and Sn, an alloy including these metals, or the like.

A proportion of the Si-containing composite material 30 in the negative electrode active material is preferably greater than or equal to 1 mass% and less than or equal to 15 mass% relative to a total mass of the negative electrode active material. When the proportion of the Si-containing composite material 30 is within this range, the aforementioned effect by GaN becomes more remarkable.

A method for forming the GaN 36 coating on the base particles 35 surfaces is not particularly limited, and deposition, sputtering, or the like may be used, for example. The GaN 36 is preferably formed by sputtering. The GaN 36 may be formed by, for example, performing sputtering film-formation while making the base particles 35 flow. Examples of a method for making the base particles 35 flow include rotating or vibrating a container housing the base particles 35.

### [Positive Electrode]

The positive electrode 11 has, for example, a positive electrode current collector and a positive electrode mixture layer formed on a surface of the positive electrode current collector. The positive electrode mixture layer is preferably formed on both surfaces of the positive electrode current collector. For the positive electrode current collector, a foil of a metal stable within a potential range of the positive electrode, such as aluminum, a film in which such a metal is disposed on a surface layer, or the like may be used. The positive electrode mixture layer includes, for example, a positive electrode active material, a binder, a conductive agent, and the like. The positive electrode 11 may be produced by, for example, applying a positive electrode mixture slurry including the positive electrode active material, the binder, the conductive agent, and the like on the both surfaces of the positive electrode current collector, drying the coating to form the positive electrode mixture layer, and then rolling this positive electrode mixture layer.

Examples of the positive electrode active material may include a lithium-transition metal oxide containing a transition metal element such as Co, Mn, and Ni. The lithium-transition metal oxide is, for example, LiₓCoO₂, LiₓNiO₂, LiₓMnO₂, LiₓCo_{y}Ni_{1-y}O₂, LiₓCo_{y}M_{1.y}O_{z}, LiₓNi_{1-y}M_{y}O_{z}, LiₓMn₂O₄, LiₓMn_{2-y}M_{y}O₄, LiMPO₄, and Li₂MPO₄F (M; at least one of Na, Mg, Sc, Y, Mn, Fe, Co, Ni, Cu, Zn, Al, Cr, Pb, Sb, and B, 0 < x ≤ 1.2, 0 < y ≤ 0.9, and 2.0 ≤ z ≤ 2.3). These may be used singly, or as a mixture thereof. In terms of attempting a higher capacity of the non-aqueous electrolyte secondary battery, the positive electrode active material preferably includes a lithium-nickel composite oxide such as LiₓNiO₂, LiₓCo_{y}Ni_{1-y}O₂, and LiₓNi_{1-y}M_{y}O_{z} (M; at least one of Na, Mg, Sc, Y, Mn, Fe, Co, Ni, Cu, Zn, Al, Cr, Pb, Sb, and B, 0 < x ≤ 1.2, 0 < y ≤ 0.9, and 2.0 ≤ z ≤ 2.3).

Examples of the conductive agent include carbon-based particles such as carbon black (CB), acetylene black (AB), Ketjenblack, carbon nanotube (CNT), graphene, and graphite. These may be used singly, or in combination of two or more.

Examples of the binder include fluororesins such as polytetrafluoroethylene (PTFE) and polyvinylidene fluoride (PVDF), polyimide resins, acrylic resins, polyolefin resins, and polyacrylonitrile (PAN). These may be used singly, or in combination of two or more.

### [Separator]

For the separator 13, a porous sheet having an ion permeation property and an insulation property is used, for example. Specific examples of the porous sheet include a fine porous thin film, a woven fabric, and a nonwoven fabric. As a material for the separator, olefin resins such as polyethylene or polypropylene, cellulose, or the like is preferable. The separator 13 may be a laminate having a cellulose fiber layer and a thermoplastic resin fiber layer such as an olefin resin. The separator 13 may be a multilayer separator including a polyethylene layer and a polypropylene layer, or a separator in which a material such as an aramid resin and a ceramic is applied on a surface of the separator 13 may also be used.

### [Non-Aqueous Electrolyte]

The non-aqueous electrolyte is a liquid electrolyte (electrolyte liquid) including a non-aqueous solvent and an electrolyte salt dissolved in the non-aqueous solvent. For the non-aqueous solvent, any of esters, ethers, nitriles such as acetonitrile, and amides such as dimethylformamide, a mixed solvent of two or more thereof, or the like may be used, for example. The non-aqueous solvents may contain a halogen-substituted derivative in which the hydrogen of these solvents is at least partially replaced with a halogen atom such as fluorine.

Examples of the esters include: cyclic carbonates such as ethylene carbonate (EC), propylene carbonate (PC), and butylene carbonate; chain carbonates such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylates such as γ-butyrolactone and γ-valerolactone; and chain carboxylates such as methyl acetate, ethyl acetate, propyl acetate, methyl propionate (MP), and ethyl propionate.

Examples of the ethers include: cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and a crown ether; and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

As the halogen-substituted derivative, fluorinated cyclic carbonates such as fluoroethylene carbonate (FEC), fluorinated chain carbonates, and fluorinated chain carboxylates such as methyl fluoropropionate (FMP) are preferably used.

The electrolyte salt is preferably a lithium salt. Examples of the lithium salt include LiBF₄, LiClO₄, LiPF₆, LiAsF₆, LiSbF₆, LiAlCl₄, LiSCN, LiCF₃SO₃, LiCF₃CO₂, Li(P(C₂O₄)F₄), LiPF₆₋ₓ(CₙF₂ₙ₊₁)ₓ (1 < x < 6, and n represents 1 or 2), LiB₁₀Cl₁₀, LiCl, LiBr, LiI, lithium chloroborane, a lithium lower aliphatic carboxylate, borate salts such as Li₂B₄O₇ and Li(B(C₂O₄)F₂), and imide salts such as LiN(SO₂CF₃)₂ and LiN(C₁F₂ₗ₊₁SO₂)(CₘF₂ₘ₊₁SO₂) {l and m represent integers of 1 or more}. These lithium salts may be used singly, or as a mixture thereof. Among them, LiPF₆ is preferably used from the viewpoints of ion conductivity, electrochemical stability, and the like. A concentration of the lithium salt is preferably, greater than or equal to 0.8 mol and less than or equal to 1.8 mol per litter of the solvent.

### EXAMPLES

Hereinafter, the present disclosure will be further described with Examples, but the present disclosure is not limited to these Examples.

### <Example 1>

### [Production of Positive Electrode]

As a positive electrode active material, a powder lithium-transition metal oxide represented by LiNi_{0.88}Co_{0.09}Al_{0.03}O₂ was used. Mixing 95 parts by mass of the positive electrode active material, 2.5 parts by mass of acetylene black (AB), and 2.5 parts by mass of polyvinylidene fluoride (PVDF) was performed, and an appropriate amount of N-methyl-2-pyrrolidone (NMP) was further added to prepare a positive electrode mixture slurry. This positive electrode mixture slurry was applied on both surfaces of a positive electrode current collector composed of aluminum foil, the coating was dried, and then the coating was rolled with a roller to produce a positive electrode in which a positive electrode mixture layer was formed on both the surfaces of the positive electrode current collector.

### [Production of Si-Containing Composite Material]

SiO₂ and Li₂CO₃ were mixed so that Si:Li was 1.05:1 at an atomic ratio, and this mixture was calcined under an atmospheric atmosphere at 950°C for 10 hours to obtain lithium silicate represented by Li₂O·2.1SiO₂. Then, the obtained lithium silicate was crushed to have an average particle diameter of 10 µm.

This lithium silicate (Li₂O·2.1SiO₂) and a raw material Si (3N, average particle diameter: 10 µm) were mixed at a mass ratio of 50:50. Then, this mixture was filled into a pot made with SUS (capacity: 500 mL) of a planetary ball mill (manufactured by FRITSCH GmbH, P-5), and 24 balls made of SUS with 20 mm in diameter were further added into the pot to perform a compositing treatment under an inert atmosphere at 200 rpm for 50 hours. Further, the mixture after the compositing treatment was calcined at 600°C for 4 hours under an inert atmosphere to obtain sintered particles in which Si fine particles were dispersed in the lithium silicate phase.

This sintered product was crushed and then passed through a mesh with 400 µm, coal pitch (manufactured by JFE Chemical Corporation, MCP 250) was added, and then the mixture was calcined under an inert atmosphere at 800°C for 5 hours to produce base particles having a carbon coating on the surfaces. An amount of the carbon coating was set to 5 mass% relative to a total mass of the base particles. Thereafter, the base particles were crushed and classified with an airflow classification device. An average particle diameter of the base particles after the classification was 10 µm.

Then, the surfaces of these base particles were coated with GaN by sputtering to produce a Si-containing composite material. Specifically, 100 g of the base particles were disposed in a vacuum chamber of a sputtering device, and sputtering film-formation was performed with an RF method by using a GaN target with 5 inch in diameter. An amount of the formed GaN film was set to 20 mass% relative to the mass of the base particles. The sputtering film-formation was performed under an Ar-gas flow environment so that a pressure in the vacuum chamber was reduced to 1.8 Pa and then the pressure in the vacuum chamber was approximately 1 Pa. The film-formation temperature was 1000°C. The sputtering film-formation was performed while making the base particles flow by rotating a container housing the base particles. The base particles after the sputtering film-formation were crushed and classified with an airflow classification device to produce a Si-containing composite material having an average particle diameter of 10 µm.

### [Production of Negative Electrode]

The above Si-containing composite material and graphite having an average particle diameter of 22 µm were mixed at a mass ratio of 4.8:95.2 to prepare a negative electrode active material. Mixing 100 parts by mass of the negative electrode active material, 1 part by mass of carboxymethylcellulose (CMC), and 1 part by mass of styrene-butadiene copolymer rubber (SBR) was performed, and this mixture was kneaded in water to prepare a negative electrode mixture slurry. The negative electrode mixture slurry was applied on both surfaces of a negative electrode current collector composed of copper foil, the coating was dried, and then the coating was rolled with a roller to produce a negative electrode in which a negative electrode mixture layer was formed on both the surfaces of the negative electrode current collector.

### [Production of Non-Aqueous Electrolyte]

Into a non-aqueous solvent in which ethylene carbonate (EC) and diethyl carbonate (DEC) were mixed at a volume ratio of 3:7, LiPF₆ was dissolved at a concentration of 1.0 mol/L to produce a non-aqueous electrolyte.

### [Production of Secondary Battery]

A positive electrode lead made of aluminum was attached to the positive electrode current collector, and a negative electrode lead made of nickel was attached to the negative electrode current collector. The positive electrode and the negative electrode were spirally wound via a separator made of a polyolefin to produce a wound electrode assembly. This electrode assembly was housed in a bottomed cylindrical battery case body with 18.2 mm in outer diameter and 65 mm in height. The above non-aqueous electrolyte was injected, and then an opening of the battery case body was sealed with a gasket and a sealing assembly to produce a 18650-type cylindrical secondary battery.

### <Example 2>

A secondary battery was produced in the same manner as in Example 1 except that, in the production of the Si-containing composite material, the amount of the GaN film formed was changed to 10 mass% relative to the mass of the base particles.

### <Example 3>

A secondary battery was produced in the same manner as in Example 1 except that, in the production of the negative electrode, the mixing ratio between the Si-containing composite material and the graphite constituting the negative electrode active material was changed to a mass ratio of 15:85.

### <Example 4>

A secondary battery was produced in the same manner as in Example 1 except that: in the production of the Si-containing composite material, the amount of the GaN film formed was changed to 10 mass% relative to the mass of the base particles; and in the production of the negative electrode, the mixing ratio between the Si-containing composite material and the graphite constituting the negative electrode active material was changed to a mass ratio of 15:85.

### <Example 5>

A secondary battery was produced in the same manner as in Example 1 except that, in the production of the negative electrode, the mixing ratio between the Si-containing composite material and the graphite constituting the negative electrode active material was changed to a mass ratio of 2.8:97.2.

### <Comparative Example 1>

A secondary battery was produced in the same manner as in Example 1 except that, in the production of the Si-containing composite material, the GaN film was not formed.

### <Comparative Example 2>

A secondary battery was produced in the same manner as in Example 1 except that: in the production of the Si-containing composite material, the GaN film was not formed; and in the production of the negative electrode, the mixing ratio between the Si-containing composite material and the graphite constituting the negative electrode active material was changed to a mass ratio of 4.0:95.2, and a GaN powder was added into the negative electrode active material so that a mass ratio between the negative electrode active material and the GaN powder was 99.2:0.8.

### <Comparative Example 3>

A secondary battery was produced in the same manner as in Example 1 except that, in the production of the Si-containing composite material, a Ga₂O₃ film was formed instead of GaN by changing the target of the sputtering film-formation.

### <Comparative Example 4>

A secondary battery was produced in the same manner as in Example 1 except that, in the production of the Si-containing composite material, an AlN film was formed instead of GaN by changing the target of the sputtering film-formation.

### <Comparative Example 5>

A secondary battery was produced in the same manner as in Example 1 except that, in the production of the Si-containing composite material, a SiC film was formed instead of GaN by changing the target of the sputtering film-formation.

### <Comparative Example 6>

A secondary battery was produced in the same manner as in Example 1 except that, in the production of the Si-containing composite material, a Si₃N₄ film was formed instead of GaN by changing the target of the sputtering film-formation.

### [Nail Penetration Test]

Each of the batteries of Examples and Comparative Examples was subjected to a nail penetration test in the following procedure.
(1) Under an environment at 25°C, the battery was charged at a constant current of 0.5 C until a battery voltage reached 4.2 V, and thereafter charged at a constant voltage of 4.2 V until a current value reached 1/50 C.
(2) Under an environment at 25°C, a temperature on a side of the battery was measured while the secondary battery charged in (1) was penetrated with an iron nail with 2 mm in diameter at a rate of 5 mm/sec at a center portion on the side of the battery to determine a highest temperature in this time.
(3) A case where the secondary battery did not cause rupture or ignition and the highest temperature was less than or equal to 100°C was evaluated as "Good". A case where the secondary battery did not cause rupture or ignition but the highest temperature was greater than 100°C was evaluated as "Fair". A case where the secondary battery caused rupture or ignition was evaluated as "Poor".

### [Cycle Test]

Under an ambient temperature of 25°C, the secondary battery of each of Examples and each of Comparative Examples was charged at a constant current of 0.5 C until a battery voltage reached 4.2 V, and then charged at a constant voltage of 4.2 V until a current value reached 1/50 C. Thereafter, the secondary battery was discharged at a constant current of 0.5 C until 2.85 V. This course of charge and discharge was specified as one cycle, and a cycle test with 200 cycles was performed. With the following formula, capacity retention in the charge-discharge cycle of the secondary battery of each of Examples and each of Comparative Examples was calculated. Capacity retention = (Discharge capacity at 200th cycle / Discharge capacity at 1st cycle) × 100

Table 1 summarizes the evaluation results of the nail penetration test and the cycle test of each of the secondary batteries of Examples and Comparative Examples. Table 1 also shows the type and amount of the coating material added in the Si-containing composite material, and the proportion of the Si-containing composite material in the negative electrode active material.

**[Table 1]**

| | Si-containing composite material | | | Evaluation results | |
|---|---|---|---|---|---|
| | Coating material | | Proportion in negative electrode active material [mass%] | Nail penetration test | Capacity retention [%] |
| | Type | Addition amount [mass%] | | | |
| Example 1 | GaN | 20 | 4.8 | Good | 87 |
| Example 2 | GaN | 10 | 4.8 | Good | 87 |
| Example 3 | GaN | 20 | 15 | Good | 85 |
| Example 4 | GaN | 10 | 15 | Good | 85 |
| Example 5 | GaN | 20 | 2.8 | Good | 85 |
| Comparative Example 1 | - | - | 4.8 | Fair | 85 |
| Comparative Example 2 | GaN powder at 20 mass% was added | | 4.0 | Fair | 75 |
| Comparative Example 3 | Ga₂O₃ | 20 | 4.8 | Poor | 72 |
| Comparative Example 4 | AlN | 20 | 4.8 | Good | 70 |
| Comparative Example 5 | SiC | 20 | 4.8 | Good | 77 |
| Comparative Example 6 | Si₃N₄ | 20 | 4.8 | Poor | 70 |

The secondary batteries of Examples yielded better results of the nail penetration test and the capacity retention greater than or equal to that of the secondary battery of Comparative Example 1. Meanwhile, Comparative Example 2 in which GaN did not coat the Si-containing composite material but contained in the negative electrode mixture layer deteriorated the capacity retention compared with the secondary battery of Comparative Example 1. In addition, the secondary batteries of Comparative Examples 3 to 6 using the Si-containing composite material coated with the material other than GaN failed to obtain the results in which the nail penetration test and the capacity retention were both achieved. From these results, it is understood that the safety may be improved in the secondary battery without deteriorating the charge-discharge cycle characteristics by coating the surfaces of the base particles with GaN.

The present disclosure is further described by the following embodiments.
Configuration 1:
   A negative electrode active material for a non-aqueous electrolyte secondary battery, including a Si-containing composite material, wherein
   the Si-containing composite material includes: base particles in which Si fine particles are dispersed in a base phase; and GaN coating on surfaces of the base particles.
Configuration 2:
   The negative electrode active material for a non-aqueous electrolyte secondary battery according to Configuration 1, wherein the base particles have a carbon coating on the surfaces.
Configuration 3:
   The negative electrode active material for a non-aqueous electrolyte secondary battery according to Configuration 2, wherein the GaN coats at least a part of surface of the carbon coating.
Configuration 4:
   The negative electrode active material for a non-aqueous electrolyte secondary battery according to any one of Configurations 1 to 3, wherein the base phase is a silicate phase.
Configuration 5:
   The negative electrode active material for a non-aqueous electrolyte secondary battery according to any one of Configurations 1 to 3, wherein the base phase is a silicate phase.
Configuration 6:
   The negative electrode active material for a non-aqueous electrolyte secondary battery according to any one of Configurations 1 to 3, wherein the base phase is an amorphous carbon phase.
Configuration 7:
   The negative electrode active material for a non-aqueous electrolyte secondary battery according to any one of Configurations 1 to 6, wherein, in the Si-containing composite material, a mass of the GaN is greater than or equal to 10 parts by mass and less than or equal to 20 parts by mass relative to 100 parts by mass of the base particle.
Configuration 8:
   The negative electrode active material for a non-aqueous electrolyte secondary battery according to any one of Configurations 1 to 7, wherein a proportion of the Si-containing composite material in the negative electrode active material for a non-aqueous electrolyte secondary battery is greater than or equal to 1 mass% and less than or equal to 15 mass% relative to a total mass of the negative electrode active material for a non-aqueous electrolyte secondary battery.
Configuration 9:
   A non-aqueous electrolyte secondary battery, comprising:
   a negative electrode including the negative electrode active material for a non-aqueous electrolyte secondary battery according to any one of Configurations 1 to 8;
   a positive electrode; and
   a non-aqueous electrolyte.

### REFERENCE SIGNS LIST

10 Non-aqueous electrolyte secondary battery, 11 Positive electrode, 12 Negative electrode, 13 Separator, 14 Electrode assembly, 16 Exterior housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket, 30 Si-containing composite material, 32 Si fine particle, 34 Base phase, 35 Base particle, 36 GaN, 38 Carbon coating

## Claims

1. A negative electrode active material for a non-aqueous electrolyte secondary battery, including a Si-containing composite material, wherein
the Si-containing composite material includes: base particles in which Si fine particles are dispersed in a base phase; and GaN coating on surfaces of the base particles.

2. The negative electrode active material for a non-aqueous electrolyte secondary battery according to claim 1, wherein the base particles have a carbon coating on the surfaces.

3. The negative electrode active material for a non-aqueous electrolyte secondary battery according to claim 2, wherein the GaN coats at least a part of surface of the carbon coating.

4. The negative electrode active material for a non-aqueous electrolyte secondary battery according to claim 1, wherein the base phase is a silicate phase.

5. The negative electrode active material for a non-aqueous electrolyte secondary battery according to claim 1, wherein the base phase is a lithium silicate phase.

6. The negative electrode active material for a non-aqueous electrolyte secondary battery according to claim 1, wherein the base phase is an amorphous carbon phase.

7. The negative electrode active material for a non-aqueous electrolyte secondary battery according to claim 1, wherein, in the Si-containing composite material, a mass of the GaN is greater than or equal to 10 parts by mass and less than or equal to 20 parts by mass relative to 100 parts by mass of the base particle.

8. The negative electrode active material for a non-aqueous electrolyte secondary battery according to claim 1, wherein a proportion of the Si-containing composite material in the negative electrode active material for a non-aqueous electrolyte secondary battery is greater than or equal to 1 mass% and less than or equal to 15 mass% relative to a total mass of the negative electrode active material for a non-aqueous electrolyte secondary battery.

9. A non-aqueous electrolyte secondary battery, comprising:
a negative electrode including the negative electrode active material for a non-aqueous electrolyte secondary battery according to any one of claims 1 to 8;
a positive electrode; and
a non-aqueous electrolyte.
